# EUROPÄISCHE PATENTSCHRIFT

(11) **EP 1 398 411 B1**
(45) Veröffentlichungstag und Bekanntmachung des Hinweises auf die Patenterteilung: **17.05.2006**
(21) Anmeldenummer: 03018200.0
(22) Anmeldetag: 09.08.2003
(51) Int. Cl.: D21F 1/00

(54) **Verfahren zum Verbinden der Bandenden von Transportbändern sowie Transportband und Schliesshilfe zur Durchführung dieses Verfahrens**
Process for joining the ends of a conveyer belt, conveyor belt and closing aid for carrying out that process
Procédé pour joindre les extrémités d' un transporteur à courroie, transporteur à courroie et dispositif auxiliaire de fermeture pour mettre en oeuvre ledit procédé

(30) Priorität: 10.09.2002 DE 20214069 U
(43) Veröffentlichungstag der Anmeldung: 17.03.2004
(73) Patentinhaber: Heimbach GmbH & Co., 52353 Düren (DE)
(72) Erfinder: Halterbeck, Walter, 52353 Düren (DE)
(74) Vertreter: Paul, Dieter-Alfred

(56) Entgegenhaltungen:
- EP-A- 0 311 828
- EP-A- 0 332 146

## Beschreibung

Die Erfindung betrifft ein Verfahren zum Verbinden der stirnseitigen Bandenden von Transportbändern unter Verwendung einer Schließhilfe, die eine Mehrzahl von Schließhilfelementen aufweist, die jeweils im Bereich beider Bandenden über Befestigungsorgane im Abstand zueinander derart festgelegt werden, daß sie jeweils die Bandenden überbrücken, wobei die Schließhilfelemente Spannelemente aufweisen, die die Bandenden gegeneinander ziehen, und wobei dann die Bandenden mittels Kupplungselementen miteinander verbunden und die Schließhilfe anschließend wieder von dem Transportband entfernt wird. Die Erfindung bezieht sich des weiteren auf ein Transportband mit an seinen stirnseitigen Bandenden angebrachten Kupplungselementen sowie mit einer Schließhilfe, die eine Mehrzahl von Schließhilfelementen aufweist, die Befestigungsorgane sowie zwischen diesen Spannelemente aufweisen, wobei die Befestigungsorgane im Bereich der Bandenden derart befestigt bzw. befestigbar sind, daß die Schließhilfelemente die Bandenden überbrücken, und wobei die Schließhilfe nach Herstellung der Kupplung wieder von dem Transportband entfernbar ist. Schließlich betrifft die Erfindung eine Schließhilfe für die provisorische Verbindung der stirnseitigen Bandenden eines Transportbandes, bestehend aus einer Mehrzahl von Schließhilfelementen, die Befestigungsorgane für die Befestigung an dem Transportband sowie Spannelemente aufweisen.

Transportbänder sind in vielfältigen Ausführungsformen bekannt. Sie dienen dem Transport von Gegenständen oder Schüttgütern und erfüllen dabei reine Transportzwecke. Transportbänder werden aber auch in Maschinen verwendet, beispielsweise um Schüttgüter oder Bahnen zu trocknen. In diesem Fall sind die Transportbänder siebartig ausgebildet und folglich permeabel. Hierzu gehören auch sogenannte Papiermaschinenbespannungen. Dabei handelt es sich um sehr breite und lange Siebe oder Filze, die der Formierung und dem Transport der Papierbahn durch die Papiermaschine dienen und dabei die Papierbahn unterstützen.

Solche Transportbänder werden häufig endlich ausgebildet, damit sie einfacher in die zugehörige Maschine eingezogen werden können. Die stirnseitigen Bandenden müssen dann durch eine Naht miteinander verbunden werden, wobei der Begriff "Naht" hier sehr weit zu verstehen ist und auch solche Verbindungen umfaßt, die nicht durch Nähen hergestellt worden sind.

Als besonders geeignet für die Verbindung von Bandenden solcher Transportbänder hat sich die Steckdrahtnaht erwiesen. Bei dieser Nahtform wird an beiden Bandenden eine Vielzahl von Ösen ausgebildet, die zwecks Verbindung der Bandenden kammartig in gegenseitige Überlappung gebracht werden, so daß parallel zu den Bandenden und quer zur Laufrichtung des Transportbandes ein Steckdrahtkanal entsteht. Durch diesen Kanal wird ein Steckdraht aus Metall oder Kunststoff hindurchgeschoben, wodurch die Bandenden miteinander gekuppelt werden.

Soweit das Transportband aus einem Gewebe besteht oder ein Gewebe als Träger aufweist, ist es bekannt, die Ösen durch umgeschlagene Längsfäden auszubilden (vgl. EP 0 182 597 B1; DE-A-2 338 263). Statt dessen können aber auch besondere Ösenbänder vorgesehen werden, die mit den Bandenden verbunden werden (vgl. GB-A-1 016 649). Dabei können die Ösen auch von Wendeln gebildet werden (vgl. EP 0 564 436 B1).

Der Gedanke, sich quer zur Transportrichtung erstreckende Wendeln in Überlappung zu bringen und dann mittels eines Steckdrahtes miteinander zu kuppeln, hat zu einer neuen Gattung von Transportbändern geführt, nämlich den sogenannten Drahtgliederbändern. Diese Bänder bestehen aus einer Vielzahl von sich quer zur Transportrichtung erstreckenden Drahtwendeln, wobei sich jeweils zwei benachbarte Drahtwendeln kammartig überlappen und mittels eines Steckdrahtes gekuppelt sind (vgl. EP 0 018 200 B2; DE 31 47 115 A1, EP 0 211 471 B1). Solche Drahtgliederbänder sind sehr vielseitig einsetzbar, beispielsweise auch als Trockensiebe in Papiermaschinen.

Da solche Transportbänder häufig sehr lang und breit sind (beispielsweise mehr als 50 m lang und bis zu 11,5 m breit) und zudem ein Flächengewicht von 1000 g/qm und mehr haben können, bereitet das Einziehen solcher Transportbänder in die zugehörige Maschine erhebliche Handhabungsschwierigkeiten. Dabei ist es besonders schwierig, die beiden Bandenden derart einander anzunähern und in Position zu bringen, daß sich beispielsweise bei einer Steckdrahtnaht die Ösen kammartig überlappen und ein Steckdraht eingeschoben werden kann, um die Bandenden miteinander zu kuppeln und das Transportband endlos zu machen. Um diesen Vorgang zu erleichtern, sind Schließhilfen entwickelt worden, die provisorisch im Bereich beider Bandenden angebracht und diese überbrücken. Durch die Schließhilfen können die Bandenden in eine Position gebracht werden, die das Kuppeln der Bandenden ermöglicht und in der die Bandenden nicht unter Zugbeanspruchung stehen. Nach der Kupplung der Bandenden wird die jeweilige Schließhilfe wieder abgenommen. Sie ist also nur temporär mit den Bandenden verbunden.

Es sind verschiedene Ausführungsformen von Schließhilfen bekannt. Bei den Schließhilfen nach der DE 27 03 147 C2 und US-A-4,035,872 wird ein Reißverschluß verwendet, dessen beide Hälften lösbar an den Bandenden befestigt werden, wonach dann der Reißverschluß geschlossen wird. Bei der Schließhilfe nach der EP 0 041 232 B2 werden an den Bandenden Streifen angenäht, die über Klammern miteinander verbunden werden. Als Schließhilfen kommen auch Paare von komplementären Profilen zur Anwendung, die miteinander in Eingriff gebracht werden (vgl. EP 0 118 406 A1; DE-GM 88 12 667.6). Ein Zwitter zwischen Reißverschluß und Klammerprofilen läßt sich der FR-A-2 263 425 entnehmen.

Die vorgenannten Schließhilfen verlangen in aller Regel eine sehr genaue örtliche Befestigung der Schließhilfe an den beiden Bandenden, da sich ansonsten die Bandenden nach Schließen der Schließhilfe nicht in der für das Kuppeln erforderlichen Position befinden. Außerdem müssen die Bandenden bei den Reißverschlußlösungen von Hand sehr nah aneinander oder sogar in Überlappung gebracht werden. Hierzu bedarf es erheblicher Kräfte, so daß solche Schließhilfen bei großen Bändern kaum einsetzbar sind.

Bei dem Transportband nach der US-A-3,972,105 wird von einer Schließhilfe Gebrauch gemacht, die aus einer Vielzahl von über die Breite des Transportbandes verteilten Schließhilfelementen besteht. Jedes einzelne Schließhilfelement weist endseitig Befestigungsorgane mit in Richtung auf das Transportband vorstehenden Dornen auf, die sich beim Aufsetzen auf das Transportband in dieses eingraben. Jeweils zwei gegenüberliegende Befestigungsorgane eines Schließhilfelements werden durch eine auf Zug beanspruchte Schraubenfeder als Spannelement miteinander verbunden. Die Schraubenfedern der Schließhilfelemente sollen die Bandenden derart zusammenziehen, daß die an den Bandenden vorgesehen Ösen kammartig in Überlappung gebracht werden und durch den so gebildeten Kanal ein Steckdraht geschoben werden kann. Dann werden die Schließhilfelemente wieder abgenommen.

Nachteilig bei dieser Schließhilfe ist, daß die Schließhilfelemente vor Fixierung der Befestigungsorgane an dem Transportband gespannt werden müssen, indem die Schraubenfeder auseinandergezogen wird. Nur so kann eine Zugkraft auf die Bandenden ausgeübt werden, die die Ösen in Überlappung bringt. Bei schweren Transportbändern ist eine solche Schließhilfe nicht anwendbar, da dann sehr steife Federn verwendet werden müßten, die nicht von Hand ausreichend auseinandergezogen werden könnten.

Der Erfindung liegt die Aufgabe zugrunde, ein Verfahren zum Verbinden der Bandenden von Transportbändern bereitzustellen, mit dem die Bandenden auch schwerer Transportbänder schnell und ohne großen Kraftaufwand sowie präzise in die Kupplungsposition gebracht werden können, auch wenn die Bandenden zunächst weit voneinander entfernt sind. Eine weitere Aufgabe besteht darin, ein zur Durchführung des Verfahrens geeignetes Transportband und eine Schließhilfe hierfür zu konzipieren.

Diese Aufgabe wird - was das Verfahren betrifft - erfindungsgemäß dadurch gelöst, daß als Schließhilfelemente Zurrgurte mit jeweils einem Zurrmechanismus verwendet werden, durch dessen Betätigung der Abstand zwischen den Bandenden bis zu einer deren Kupplung ermöglichenden Kupplungsstellung verringert wird.

Was das Transportband selbst und die Schließhilfe betrifft, wird die Aufgabe dadurch gelöst, daß die Schließhilfelemente als Zurrgurte ausgebildet sind, die als Spannelemente jeweils einen Zurrmechanismus aufweisen.

Grundgedanke der Erfindung ist es also, als Schließhilfelemente sogenannte Zurrgurte zu verwenden. Solche Zurrgurte sind grundsätzlich bekannt. Sie werden insbesondere zur Fixierung von Gegenständen auf Lastkraftwagen eingesetzt. Beispiele hierfür sind der EP 0 311 828 A2 und EP 0 848 188 A2 zu entnehmen. Sie weisen einen Zurrmechanismus auf, mit dem auf das Band bzw. die Bänder des Zurrgurtes von Hand hohe Kräfte aufgebracht werden können. Durch Verwendung einer Mehrzahl solcher Zurrgurte über die Breite des Transportbandes verteilt und jeweils die Bandenden überbrückend können diese Bandenden auch dann in eine Kupplungsposition gebracht werden, wenn die Bandenden sehr weit - z.B. 3 oder 4 Meter - auseinander liegen und/oder wenn das Transportband wegen seiner Länge und Breite sehr schwer ist und deshalb ein zusammenbringen der Bandenden von Hand nicht oder nur unter großen Schwierigkeiten und mit entsprechendem Zeitaufwand möglich wäre. Auch ist es unerheblich, ob sich die Kupplungsposition in der Maschine in einem horizontalen, vertikalen oder diagonalen Zug befindet, selbst wenn das Transportband im freien Zug hängt.

Durch Verwendung der erfindungsgemäßen Schließhilfe geht das Kuppeln auch von schweren Transportbändern zügig. Die Zurrgurte lassen sich auch bei hohen Zugkräften auf den Millimeter genau spannen, so daß die Bandenden präzise in die vorgesehene Position gebracht werden können. Dabei kommt es nicht darauf an, an welchen Stellen die Befestigungsorgane mit dem Transportband verbunden werden, d.h. es muß nicht ein bestimmter Abstand zum Bandende eingehalten werden. Dies erleichtert die Montage der Schließhilfe. Auch können die Schließhilfen mehrfach verwendet werden und zudem beidseitig angebracht werden.

In Ausbildung der Erfindung ist vorgesehen, daß die Zurrgurte in einem Abstand von 30 bis 50 cm angeordnet werden, wobei der Abstand um so geringer ist, je höher das Gewicht des Transportbandes und der von der Gewichtskraft auf die Bandenden ausgeübte Zug ist. Die Befestigungsorgane können jeweils in einem Abstand von 20 bis 80 cm vom Bandende befestigt werden.

Im Stand der Technik sind sowohl zweiteilige als auch einteilige Zurrgurte bekannt. Ein zweiteiliger Zurrgurt weist jeweils ein erstes Gurtband, an dem der Zurrmechanismus befestigt ist, und ein zweites Gurtband auf, das mit dem Zurrmechanismus verbindbar ist. Bei Verwendung solcher Zurrgurte als Schließhilfelemente wird das jeweils erste Gurtband im Bereich des einen Bandendes und das zweite Gurtband im Bereich des anderen Bandendes über die Befestigungsorgane an dem Transportband befestigt. Dies kann beispielsweise mittels Vernähen geschehen.

Alternativ dazu besteht aber auch die Möglichkeit, einteilige Zurrgurte mit nur einem einzigen Gurtband zu verwenden. In diesem Fall werden für jeden Zurrgurt jeweils gegenüberliegend je eine Öse als Befestigungsorgan im Bereich der Bandenden angebracht. Dann wird das Gurtband durch die beiden gegenüberliegenden Ösen hindurchgeführt und sein freies Ende mit dem Zurrmechanismus gekuppelt. Dabei können die Ösen von beispielsweise einer textilen Gurtschlaufe gebildet werden. Hierzu eignen sich textile Gewebe, zum Beispiel aus Polyester, oder glasfaserverstärkte Kunststoffbänder. Diese Materialien eignen sich auch für die Gurtbänder.

Soweit das Transportband als Drahtgliederband ausgebildet ist, können die Befestigungsorgane dadurch mit dem Transportband verbunden werden, daß an ihnen Wendeln angebracht werden oder sie daraus bestehen und daß sie dann in das Transportband quer zur Fläche eingedrückt und mit diesem durch Einschieben eines Steckdrahtes in das Transportband gekuppelt werden. Soweit die Fixierung der Befestigungsorgane durch Vernähen geschieht, sollte zwischen den Befestigungsorganen und dem Transportband ein Hilfsband zwecks Schonung der Oberfläche des Transportbandes genäht werden.

Der Zurrmechanismus weist in an sich bekannter Weise eine Wickelwelle auf, die mit Hilfe eines Zurrhebels in Aufwickelrichtung verdrehbar ist. Dies geschieht zweckmäßigerweise so, daß die Wickelwelle mit einer ersten Ratsche in Eingriff steht, die ein Verdrehen der Wickelwelle in Abwickelrichtung verhindert, und daß die Wickelwelle über eine zweite Ratsche mit dem Zurrhebel in Eingriff steht, über den die Wickelwelle nur in Aufwickelrichtung antreibbar ist. Solche Zurrmechanismen haben sich bei den für andere Zwecke verwendeten Zurrgurten bewährt. Es lassen sich damit große Kräfte und genaue Positionierungen erzielen. Durch Lösen der ersten Ratsche können die Zurrgurte entspannt und dann von dem Transportband abgenommen werden.

Darüber hinaus können Zurrgurte verwendet werden, bei denen der Zurrmechanismus mit einer Ratsche versehen ist, die eine Sperrmöglichkeit für das gespannte Zurrband vorsieht. Auf diese Weise kann das bereits aufgewickelte Zurrband unter Spannung nachgezogen werden, um weitere Spannwege zu erhalten.

In der Zeichnung ist die Erfindung anhand eines Ausführungsbeispiels näher veranschaulicht. Es zeigen:
- Figur 1: ein Transportband mit Schließhilfe in ungekuppeltem Zustand in perspektivischer Ansicht und
- Figur 2: die Seitenansicht des Zurrmechanismusses eines Zurrgurtes als Schließhilfe für das Transportband gemäß Figur 1.

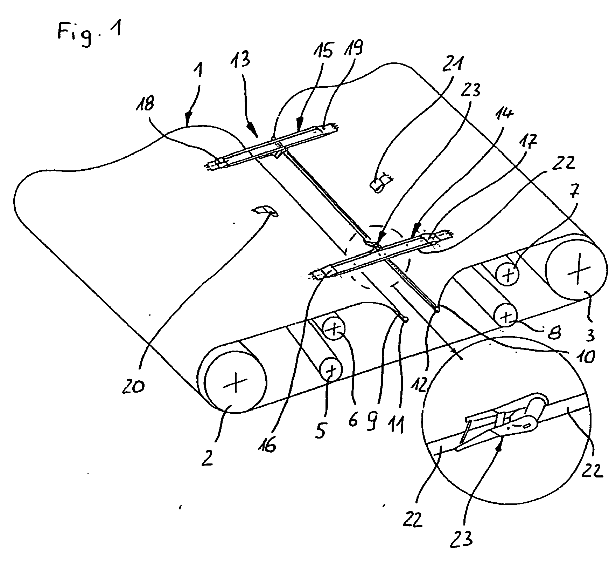

Das in Figur 1 dargestellte Transportband 1 ist um zwei endseitige Umlenkwalzen 2, 3 herumgelegt und wird zusätzlich durch insgesamt vier Stützwalzen 5, 6, 7, 8 abgestützt. Es ist endlich ausgebildet, d.h. es weist stirnseitig Bandenden 9, 10 auf, die mit sich quer zur Laufrichtung des Transportbandes 1 über die gesamte Breite der Bandenden 9, 10 erstreckenden Kupplungswendeln 11, 12 versehen sind. Die Kupplungswendeln 11, 12 hängen an Längsfäden des Gewebes, die schlaufenartig um die den Bandenden 9, 10 nahen Schenkeln der Kupplungswendeln 11, 12 herumgelegt und in das Gewebe des Transportbandes 1 zurückgewebt worden sind.

Das Transportband 1 besteht aus einem Gewebe aus Kunststoffäden, beispielsweise aus Polyester oder Polyphenylensulfid. Dessen Längsfäden erstrecken sich in Laufrichtung des Transportbandes 1.

Die Bandenden 9, 10 werden von einer Schließhilfe 13 überbrückt, die drei im gleichen Abstand zueinander angeordneten Zurrgurte aufweist, von denen nur die beiden äu-ßeren Zurrgurte 14, 15 eingezeichnet sind. Die Zurrgurte 14, 15 sind zwischen jeweils zwei Bandschlaufen 16, 17 bzw. 18, 19 verspannt, wobei jeweils eine Bandschlaufe 16 bzw. 18 im Bereich des linksseitigen Bandendes 9 und die anderen Bandschlaufen 17, 19 im Bereich des rechtsseitigen Bandendes 10 angeordnet sind und sich jeweils gegenüberstehen. Weitere zwei sich gegenüberliegende Bandschlaufen 20, 21 sind zwischen den beiden Zurrgurten 14, 15 angeordnet, um einen weiteren Zurrgurt aufnehmen zu können. Die Bandschlaufen 16 bis 21 sind endseitig zusammengenäht und dort über hier nicht näher dargestellte Nähte unter zwischenlegung eines Hilfsbandes zwecks Schonung der Oberfläche des Transportbandes 1 an diesem provisorisch angenäht.

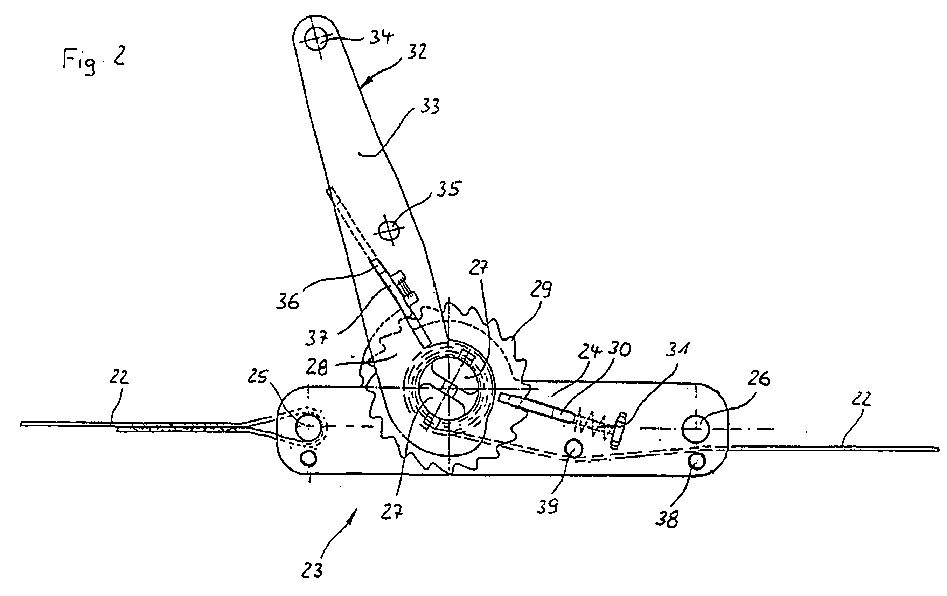

Der Zurrgurt 14 ist einteilig ausgebildet und hat ein Gurtband 22, an dessen einem Ende ein Zurrmechanismus 23 befestigt ist, der in dem kreisförmigen Ausschnitt etwas größer dargestellt ist, jedoch konkret erst der Figur 2 zu entnehmen ist. Das Gurtband 22 erstreckt sich von dem Zurrmechanismus 23 zunächst in Richtung der Bandschlaufe 16, durchsetzt die Bandschlaufe 16 und erstreckt sich dann in Richtung auf die Bandschlaufe 17. Durch diese Bandschlaufe 17 ist das Gurtband 22 ebenfalls hindurchgesteckt. Es verläuft dann in umgekehrter Richtung, und zwar in Richtung auf den Zurrmechanismus 23 zu. Das dortige Ende des Gurtbandes 22 ist - wie aus Figur 2 noch näher zu ersehen ist - auf eine Wickelwelle des Zurrmechanismusses 23 aufgewickelt. Der zweite Zurrgurt 15 ist in der gleichen Weise durch die Bandschlaufen 18, 19 geführt.

Der in Figur 2 dargestellte Zurrmechanismus 23 weist zwei in der Draufsicht auf die Zeichnung hintereinander liegende Seitenwangen 24 auf, die über Endbolzen 25, 26 miteinander verbunden sind und auf Abstand gehalten werden.

In den Seitenwangen 24 ist eine Wickelwelle 27 gelagert. Sie steht außen über die Seitenwangen 24 über und hat dort jeweils ein Ratschenrad 28 mit einer Ratschenverzahnung 29. Die Ratschenverzahnung 29 steht im Eingriff mit einem ersten Ratschenblatt 30, das verschieblich in Schlitzen in den Seitenwangen 24 gelagert ist und über eine Druckfeder 31 in Richtung auf die Ratschenverzahnung 29 gedrückt wird. Das Ratschenblatt 30 läßt zwar eine Verdrehung der Wickelwelle 27 im Uhrzeigersinn zu, nicht jedoch in umgekehrter Richtung.

Auf der Wickelwelle 27 ist ein Zurrhebel 32 frei drehbar, d.h. relativ zu der Wickelwelle 27 gelagert. Der Zurrhebel 32 besteht aus zwei im Abstand zueinander angeordneten Hebelarmen 33, die über Distanzbolzen 34, 35 auf Abstand gehalten werden. Der obere Distanzbolzen 34 dient dabei als Handgriff.

Die Hebelarme 33 weisen parallele und gegenüberliegende Führungsschlitze 36 auf, in denen ein zweites Ratschenblatt 37 im wesentlichen radial zur Wickelwelle 27 verschieblich gelagert ist. Es steht im Eingriff mit den Ratschenverzahnungen 29 der Ratschenräder 28. Durch Bewegung des Zurrhebels 32 im Uhrzeigersinn wird die Wickelwelle 27 mittels des zweiten Ratschenblatts 37 mitgenommen.

An dem linksseitigen Ende des Zurrmechanismusses 23 ist das Gurtband 22 dadurch befestigt, daß es um den Endbolzen 25 herumgelegt und das freie Ende mit dem Gurtband 22 vernäht worden ist. Nach Durchlaufen der Bandschlaufen 16, 17 (Figur 1) gelangt das Gurtband 22 wieder zu dem Zurrmechanismus 23 und läuft dort - geführt durch den zweiten Endbolzen 26 und zwei Führungswalzen 38, 39 - zu der Wickelwelle 27. Dort ist ein Teil des Gurtbandes 22 schon aufgewickelt.

Zum weiteren Spannen des Gurtbandes 22 wird der Zurrhebel 32 in entsprechender Anzahl hin- und herbewegt. Bei der Bewegung im Uhrzeigersinn wird die Wickelwelle 27 mitgenommen mit der Folge, daß das Gurtband 22 weiter auf die Wickelwelle 27 aufgewickelt wird. Bei der Rückwärtsbewegung des Zurrhebels 32 ratscht das zweite Ratschenblatt 37 über die Ratschenverzahnung 29 hinweg, wobei die Wikkelwelle 27 durch das erste Ratschenblatt 30 festgehalten wird, d.h. die Wickelwelle 27 kann sich nicht gegen den Uhrzeigersinn bewegen.

Mit Hilfe des Zurrmechanismusses 23 ist es also möglich, die Bandenden 9, 10 so einander anzunähern, daß die Kupplungswendeln 11, 12, in Überlappung gebracht und auf diese Weise ein Kanal gebildet wird, durch den ein Steckdraht hindurchgesteckt werden kann. Ist dies geschehen, kann der Zurrgurt 14 dadurch entspannt werden, daß das erste Ratschenblatt 30 aus seiner Eingriffsstellung gegen die Wirkung der Druckfeder 31 herausbewegt wird. Die Wikkelwelle 27 kommt dann frei und kann sich gegen den Uhrzeigersinn verdrehen mit der Folge, daß sich das Gurtband 22 von der Wickelwelle 27 abwickelt. Entsprechendes gilt selbstverständlich für den Zurrgurt 15. Danach können die Zurrgurte 14, 15 aus den Bandschlaufen 16, 17 bzw. 18, 19 herausgezogen und sämtliche Bandschlaufen 16 bis 21 entfernt werden.

## Patentansprüche

1. Verfahren zum Verbinden der stirnseitigen Bandenden (9, 10) von Transportbändern (1) unter Verwendung einer Schließhilfe (13), die aus einer Mehrzahl von Schließhilfelementen (14, 15) besteht, die jeweils im Bereich beider Bandenden (9, 10) über Befestigungsorgane (16 bis 21) im Abstand zueinander derart festgelegt werden, daß sie jeweils die Bandenden (9, 10) überbrücken, wobei die Schließhilfelemente (14, 15) Spannelemente (23) aufweisen, die die Bandenden (9, 10) gegeneinander ziehen, und wobei dann die Bandenden (9, 10) mittels Kupplungselementen (11, 12) miteinander verbunden und die Schließhilfe (13) anschließend wieder von dem Transportband (1) entfernt wird, **dadurch gekennzeichnet, daß** als Schließhilfelemente Zurrgurte (14, 15) mit jeweils einem Zurrmechanismus (23) verwendet werden, durch dessen Betätigung der Abstand zwischen den Bandenden (9, 10) bis zu einer deren Kupplung ermöglichenden Kupplungsstellung verringert wird.

2. Verfahren nach Anspruch 1, **dadurch gekennzeichnet, daß** die Zurrgurte (14, 15) in einem Abstand von 30 bis 150 cm angeordnet werden.

3. Verfahren nach Anspruch 1 oder 2, **dadurch gekennzeichnet, daß** die Befestigungsorgane (16 bis 21) jeweils in einem Abstand von 20 bis 80 cm vom Bandende (9, 10) befestigt werden.

4. Verfahren nach einem der Ansprüche 1 bis 3, **dadurch gekennzeichnet, daß** zweiteilige Zurrgurte mit jeweils einem ersten Gurtband, an dem der zurrmechanismus befestigt ist, und mit jeweils einem zweiten Gurtband verwendet werden, wobei jeweils das erste Gurtband im Bereich des einen Bandendes und das zweite Gurtband im Bereich des anderen Bandendes über die Befestigungsorgane an dem Transportband befestigt werden.

5. Verfahren nach einem der Ansprüche 1 bis 3, **dadurch gekennzeichnet, daß** einteilige Zurrgurte (14, 15) mit einem einzigen Gurtband (22) verwendet werden und daß jeweils gegenüberliegend je eine Öse (16 bis 21) als Befestigungsorgan im Bereich der Bandenden (9, 10) angebracht wird und daß dann jeweils ein Gurtband (22) durch zwei gegenüberliegende Ösen (16, 17 bzw. 18, 19 bzw. 20, 21) hindurchgeführt und sein freies Ende mit dem Zurrmechanismus (23) gekoppelt wird.

6. Verfahren nach Anspruch 5, **dadurch gekennzeichnet, daß** die Ösen von Gurtschlaufen (16 bis 21) gebildet werden.

7. Verfahren nach einem der Ansprüche 1 bis 6, **dadurch gekennzeichnet, daß** die Befestigungsorgane Wendeln aufweisen oder daraus bestehen, die in einem als Drahtgliederband ausgebildeten Transportband eingedrückt und mit diesem durch Einschieben eines Steckdrahtes in das Transportband gekuppelt werden.

8. Verfahren nach einem der Ansprüche 1 bis 6, **dadurch gekennzeichnet, daß** zwischen den Befestigungsorganen (16 bis 21) und dem Transportband (1) ein Hilfsband vorgesehen ist.

9. Transportband (1) mit an seinen stirnseitigen Bandenden (9, 10) angebrachten Kupplungselementen (11, 12) sowie mit einer Schließhilfe (13), die aus einer Mehrzahl von Schließhilfelementen (14, 15) besteht, die Befestigungsorgane (16 bis 21) sowie zwischen diesen Spannelemente (23) aufweisen, wobei die Befestigungsorgane (16 bis 21) im Bereich der Bandenden (9, 10) derart befestigt bzw. befestigbar sind, daß die Schließhilfelemente (14, 15) die Bandenden (9, 10) überbrücken, und wobei die Schließhilfe (13) nach Herstellung der Kupplung der Bandenden (9, 10) wieder von dem Transportband (1) entfernbar ist, **dadurch gekennzeichnet, daß** die Schließhilfelemente als Zurrgurte (14, 15) ausgebildet sind, die als Spannelemente jeweils einen Zurrmechanismus (23) aufweisen.

10. Transportband nach Anspruch 9, **dadurch gekennzeichnet, daß** die Zurrgurte (14, 15) in einem Abstand von 30 bis 150 cm quer zur Laufrichtung des Transportbandes (1) angeordnet sind.

11. Transportband nach Anspruch 9 oder 10, **dadurch gekennzeichnet, daß** die Befestigungsorgane (16 bis 21) in Laufrichtung des Transportbandes (1) jeweils in einem Abstand von 20 bis 80 cm vom Bandende befestigt sind.

12. Transportband nach einem der Ansprüche 9 bis 11, **dadurch gekennzeichnet, daß** die Zurrgurte zweiteilig mit jeweils einem ersten Gurtband, an dem der Zurrmechanismus befestigt ist, und mit einem zweiten Gurtband ausgebildet sind, wobei jeweils das erste Gurtband im Bereich des einen Bandendes und das zweite Gurtband im Bereich des anderen Bandendes über die Befestigungsorgane an dem Transportband festgelegt sind.

13. Transportband nach einem der Ansprüche 9 bis 11, **dadurch gekennzeichnet, daß** die Zurrgurte (14, 15) einteilig mit jeweils einem einzelnen Gurtband (22) ausgebildet sind und daß jeweils gegenüberliegend je eine Öse (16 bis 21) als Befestigungsorgan im Bereich der Bandenden (9, 10) angebracht sind und daß jeweils ein Gurtband (22) durch beide gegenüberliegende Ösen (16, 17 bzw. 18, 19 bzw. 20, 21) gesteckt und sein freies Ende mit dem zugehörigen Zurrmechanismus (23) gekoppelt ist.

14. Transportband nach einem der Ansprüche 9 bis 13, **dadurch gekennzeichnet, daß** die Befestigungsorgane Wendeln aufweisen oder daraus bestehen, die in das als Drahtgliederband ausgebildete Transportband eingesetzt und mit diesem durch einen in das Transportband (1) eingeschobenen Steckdraht gekuppelt sind.

15. Transportband nach einem der Ansprüche 9 bis 14, **dadurch gekennzeichnet, daß** jeder Zurrmechanismus (23) eine Wickelwelle (27) aufweist, die mit Hilfe eines Zurrhebels (32) in Aufwickelrichtung verdrehbar ist.

16. Transportband nach Anspruch 15, **dadurch gekennzeichnet, daß** die Wickelwelle (27) mit einer ersten Ratsche (29, 30) in Eingriff steht, die ein verdrehen der Wickelwelle (27) in Abwickelrichtung verhindert, und daß die Wickelwelle (27) über eine zweite Ratsche (29, 37) mit dem Zurrhebel (32) in Eingriff steht, über den die Wickelwelle (27) nur in Aufwikkelrichtung antreibbar ist.

17. Schließhilfe (13) für die provisorische Verbindung der stirnseitigen Bandenden (9, 10) eines Transportbandes (1), bestehend aus einer Mehrzahl von Schließhilfelementen (14, 15), die Befestigungsorgane (16 bis 21) für die Festlegung an dem Transportband (1) sowie Spannelemente (23) aufweisen, **dadurch gekennzeichnet, daß** die Schließhilfelemente als Zurrgurte (14, 15) ausgebildet sind, die als Spannelemente jeweils einen zurrmechanismus (23) aufweisen.

18. Schließhilfe nach Anspruch 17, **dadurch gekennzeichnet, daß** die Zurrgurte zweiteilig mit jeweils einem ersten Gurtband, an dem der Zurrmechanismus befestigt ist und mit einem zweiten Gurtband ausgebildet sind.

19. Schließhilfe nach Anspruch 17, **dadurch gekennzeichnet, daß** die Zurrgurte (14, 15) einteilig mit jeweils einem einzelnen Gurtband (22) ausgebildet sind und daß ihnen jeweils zwei Ösen als Befestigungsorgane zugeordnet sind, durch die das Gurtband (22) hindurchführbar oder hindurchgeführt ist.

20. Schließhilfe nach einem der Ansprüche 17 bis 19, **dadurch gekennzeichnet, daß** die Befestigungsorgane Wendeln aufweisen oder daraus bestehen, die in das als Drahtgliederband ausgebildete Transportband eingesetzt und mit diesem durch eine in das Transportband (1) eingeschobenen Steckdraht kuppelbar sind.

21. Schließhilfe nach einem der Ansprüche 17 bis 20, **dadurch gekennzeichnet, daß** jeder Zurrmechanismus (23) eine Wickelwelle (27) aufweist, die mit Hilfe eines Zurrhebels (32) in Aufwickelrichtung verdrehbar ist.

22. Schließhilfe nach Anspruch 21, **dadurch gekennzeichnet, daß** die Wickelwelle (27) mit einer ersten Ratsche (29, 30) in Eingriff steht, die ein Verdrehen der Wickelwelle (27) in Abwickelrichtung verhindert, und daß die Wickelwelle (27) über eine zweite Ratsche (29, 37) mit dem Zurrhebel (32) in Eingriff steht, über den die Wickelwelle (27) nur in Aufwikkelrichtung antreibbar ist.

## Claims

1. A method for connecting the front belt ends (9, 10) of transport belts (1) using a closure aid (13) that consists of a plurality of closure aid elements (14, 15) that are fastened at a distance from one another in the region of each of the two belt ends (9, 10), by way of attachment members (16, through 21), in such a way that they each bridge the belt ends (9, 10), the closure aid elements (14, 15) having tensioning elements (23) that pull the belt ends (9, 10) toward one another, and the belt ends (9, 10) then being connected to one another by means of coupling elements (11, 12), and the closure aid (13) then being removed from the transport belt (1),
**characterized in that** lashing straps (14, 15), each having a lashing mechanism (23), are used as closure aid elements, actuation thereof causing the distance between the belt ends (9, 10) to be reduced to a coupling position that allows them to be coupled.

2. The method as defined in Claim 1, **characterized in that** the lashing straps (14, 15) are arranged at a spacing of 30 to 150 cm.

3. The method as defined in Claim 1 or 2, **characterized in that** the attachment members (16 through 21) are each attached at a distance of 20 to 80 cm from the belt end (9, 10).

4. The method as defined in any of Claims 1 through 3, **characterized in that** two-piece lashing straps each having a first strap on which the lashing mechanism is attached, and each having a second strap, are used, the first strap respectively being attached on the transport belt in the region of the one belt end, and the second strap in the region of the other belt end, by way of the attachment members.

5. The method as defined in any of Claims 1 through 3, **characterized in that** one-piece lashing straps (14, 15) having a single strap (22) are used; and an eyelet (16 through 21) is mounted in respectively opposite fashion in the region of the respective belt ends (9, 10) as the attachment member; and a respective strap (22) is then guided through two opposite eyelets (16, 17 and 18, 19 and 20, 21) and its free end is coupled to the lashing mechanism (23).

6. The method as defined in Claim 5, **characterized in that** the eyelets are formed from strap loops (16 through 21).

7. The method as defined in any of Claims 1 through 6, **characterized in that** the attachment members comprise or are made from coils that are pushed into a transport belt embodied as a wire element belt and coupled to it by insertion of a pintle wire into the transport belt.

8. The method as defined in any of Claims 1 through 6, **characterized in that** an auxiliary belt is provided between the attachment members (16 through 21) and the transport belt (1).

9. A transport belt (1) having coupling elements (11, 12) mounted on its front belt ends (9, 10), and having a closure aid (13) that consists of a plurality of closure aid elements (14, 15) that have attachment members (16, through 21) and, between the latter, tensioning elements (23), the attachment members (16 through 21) being attached or attachable in the region of the belt ends (9, 10) in such a way that the closure aid elements (14, 15) bridge the belt ends (9, 10), the closure aid (13) being removable from the transport belt (1) after the coupling of the belt ends (9, 10) has been made,
**characterized in that** the closure aid elements are embodied as lashing straps (14, 15) that, as tensioning elements, each comprise a lashing mechanism (23).

10. The transport belt as defined in Claim 9, **characterized in that** the lashing straps (14, 15) are arranged at a spacing of 30 to 150 cm transversely to the running direction of the transport belt (1).

11. The transport belt as defined in Claim 9 or 10, **characterized in that** the attachment members (16 through 21) are each attached at a distance of 20 to 80 cm from the belt end (9, 10) in the running direction of the transport belt (1).

12. The transport belt as defined in any of Claims 9 through 11, **characterized in that** the lashing straps are embodied in two pieces, having respectively a first strap on which the lashing mechanism is attached, and having a second strap, the first strap respectively being secured on the transport belt in the region of the one belt end, and the second strap in the region of the other belt end, by way of the attachment members.

13. The transport belt as defined in any of Claims 9 through 11, **characterized in that** the lashing straps (14, 15) are embodied in one piece, having respectively a single strap (22); and an eyelet (16 through 21) is mounted in respectively opposite fashion in the region of the respective belt ends (9, 10) as the attachment member; and a respective strap (22) is then guided through both opposite eyelets (16, 17 and 18, 19 and 20, 21) and its free end is coupled to the asso ciated lashing mechanism (23).

14. The transport belt as defined in any of Claims 9 through 13, **characterized in that** the attachment members comprise or are made from coils that are inserted into a transport belt embodied as a wire element belt and coupled to it by way of a pintle wire inserted into the transport belt (1).

15. The transport belt as defined in any of Claims 9 through 14, **characterized in that** each lashing mechanism (23) comprises a winding shaft (27) that is rotatable in the winding-on direction with the aid of a lashing lever (32).

16. The transport belt as defined in Claim 15, **characterized in that** the winding shaft (27) is in engagement with a first ratchet (29, 30) that prevents rotation of the winding shaft (27) in the unwinding direction; and the winding shaft (27) is in engagement via a second ratchet (29, 37) with the lashing lever (32), with which the winding shaft (27) can be driven only in the winding-on direction.

17. A closure aid (13) for temporary connection of the front belt ends (9, 10) of a transport belt (1), consisting of a plurality of closure aid elements (14, 15) that have attachment members (16 through 21) for securing to the transport belt (1) as well as tensioning elements (23),
**characterized in that** the closure aid elements are embodied as lashing straps (14, 15) that, as tensioning elements, each comprise a lashing mechanism (23).

18. The closure aid as defined in Claim 17, **characterized in that** the lashing straps are embodied in two pieces, having respectively a first strap on which the lashing mechanism is attached, and having a second strap.

19. The closure aid as defined in Claim 17, **characterized in that** the lashing straps (14, 15) are embodied in one piece, having respectively a single strap (22); and associated with each of them as attachment members are two eyelets through which the strap (22) is guidable or guided.

20. The closure aid as defined in any of Claims 17 through 19, **characterized in that** the attachment members comprise or are made from coils that are inserted into the transport belt embodied as a wire element belt and can be coupled to it by way of a pintle wire inserted into the transport belt (1).

21. The closure aid as defined in any of Claims 17 through 20, **characterized in that** each lashing mechanism (23) comprises a winding shaft (27) that is rotatable in the winding-on direction with the aid of a lashing lever (32).

22. The closure aid as defined in Claim 21, **characterized in that** the winding shaft (27) is in engagement with a first ratchet (29, 30) that prevents rotation of the winding shaft (27) in the unwinding direction; and the winding shaft (27) is in engagement via a second ratchet (29, 37) with the lashing lever (32), with which the winding shaft (27) can be driven only in the winding-on direction.

## Revendications

1. Procédé pour joindre les extrémités frontales (9, 10) de bandes transporteuses (1) en utilisant un dispositif auxiliaire de fermeture (13), qui se compose d'une pluralité d'éléments auxiliaires de fermeture (14, 15), qui sont chacun fixés distants les uns par rapport aux autres dans la zone des deux extrémités de bande (9, 10) par l'intermédiaire d'organes de fixation (16 à 21) de telle manière qu'ils passent à chaque fois par-dessus les extrémités de bande (9, 10), les éléments auxiliaires de fermeture (14, 15) présentant des éléments de serrage (23), qui tirent les extrémités de bande (9, 10) l'une contre l'autre, et les extrémités de bande (9, 10) étant alors reliées l'une à l'autre au moyen d'éléments d'accouplement (11, 12) et le dispositif auxiliaire de fermeture (13) étant ensuite de nouveau retiré de la bande transporteuse (1), **caractérisé en ce que** des sangles d'amarrage (14, 15) sont utilisées en tant qu'éléments auxiliaires de fermeture comportant chacun un mécanisme d'amarrage (23), grâce à l'actionnement duquel la distance entre les extrémités de bande (9, 10) est réduite jusqu'à une position d'accouplement permettant leur accouplement.

2. Procédé selon la revendication 1, **caractérisé en ce que** les sangles d'amarrage (14, 15) sont disposées à une distance comprise entre 30 et 150 cm.

3. Procédé selon la revendication 1 ou 2, **caractérisé en ce que** les organes de fixation (16 à 21) sont fixés à chaque fois à une distance comprise entre 20 et 80 cm de l'extrémité de bande (9, 10).

4. Procédé selon l'une quelconque des revendications 1 à 3, **caractérisé en ce que** des sangles d'amarrage en deux parties sont utilisées avec respectivement une première sangle, à laquelle est fixé le mécanisme d'amarrage, et avec une seconde sangle, la première sangle étant à chaque fois fixée à la bande transporteuse par l'intermédiaire des organes de fixation dans la zone de l'une des extrémités de bande et la seconde sangle dans la zone de l'autre extrémité de bande.

5. Procédé selon l'une quelconque des revendications 1 à 3, **caractérisé en ce que** des sangles d'amarrage d'une seule pièce (14, 15) sont utilisées avec une seule sangle (22) et **en ce que** des oeillets (16 à 21) opposés l'un à l'autre sont placés dans la zone des extrémités de bande (9, 10) en tant qu'organe de fixation et **en ce qu'**une sangle (22) est ensuite passée à chaque fois respectivement à travers deux oeillets opposés (16, 17 et 18, 19 et 20, 21) et son extrémité libre est accouplée avec le mécanisme d'amarrage (23).

6. Procédé selon la revendication 5, **caractérisé en ce que** les oeillets sont formés par des boucles de bande (16 à 21).

7. Procédé selon l'une quelconque des revendications 1 à 6, **caractérisé en ce que** les organes de fixation présentent des spirales ou sont composés de celles-ci, lesdites spirales étant pressées dans une bande transporteuse réalisée sous forme de bande à maillons métalliques et étant accouplées avec cette dernière via insertion d'un fil à transfilage dans la bande transporteuse.

8. Procédé selon l'une quelconque des revendications 1 à 6, **caractérisé en ce qu'**une bande auxiliaire est prévue entre les organes de fixation (16 à 21) et la bande transporteuse (1).

9. Bande transporteuse (1) comportant des éléments d'accouplement (11, 12) placés au niveau de ses extrémités de bande frontales (9, 10) ainsi qu'un dispositif auxiliaire de fermeture (13), qui se compose d'une pluralité d'éléments auxiliaires de fermeture (14, 15), qui présentent des organes de fixation (16 à 21) ainsi que des éléments de serrage (23) entre ces derniers, les organes de fixation (16 à 21) étant fixés ou fixables dans la zone des extrémités de bande (9, 10) de telle manière que les éléments auxiliaires de fermeture (14, 15) passent par-dessus les extrémités de bande (9, 10), et le dispositif auxiliaire de fermeture (13) pouvant être de nouveau retiré de la bande transporteuse (1) après établissement de l'accouplement des extrémités de bande (9, 10), **caractérisée en ce que** les éléments auxiliaires de fermeture sont réalisés sous forme de sangles d'amarrage (14, 15), qui présentent à chaque fois un mécanisme d'amarrage (23) en tant qu'éléments de serrage.

10. Bande transporteuse selon la revendication 9, **caractérisée en ce que** les sangles d'amarrage (14, 15) sont disposées à une distance comprise entre 30 et 150 cm en travers du sens de marche de la bande transporteuse (1).

11. Bande transporteuse selon la revendication 9 ou 10, **caractérisée en ce que** les organes de fixation (16 à 21) sont fixés à chaque fois à une distance comprise entre 20 et 80 cm de l'extrémité de bande dans le sens de marche de la bande transporteuse (1).

12. Bande transporteuse selon l'une quelconque des revendications 9 à 11, **caractérisée en ce que** les sangles d'amarrage sont réalisées en deux parties avec respectivement une première sangle, sur laquelle est fixé le mécanisme d'amarrage, et avec une seconde sangle, la première sangle étant à chaque fois fixée à la bande transporteuse par l'intermédiaire des organes de fixation dans la zone de l'une des extrémités de bande et la seconde sangle dans la zone de l'autre extrémité de bande.

13. Bande transporteuse selon l'une quelconque des revendications 9 à 11, **caractérisée en ce que** les sangles d'amarrage (14, 15) sont réalisées d'une seule pièce avec à chaque fois une seule sangle (22) et **en ce que** des oeillets (16 à 21) opposés l'un à l'autre sont placés dans la zone des extrémités de bande (9, 10) en tant qu'organe de fixation et **en ce qu'**une sangle (22) est passée à chaque fois respectivement à travers les deux oeillets opposés (16, 17 et 18, 19 et 20, 21) et son extrémité libre est accouplée avec le mécanisme d'amarrage (23) correspondant.

14. Bande transporteuse selon l'une quelconque des revendications 9 à 13, **caractérisée en ce que** les organes de fixation présentent des spirales ou sont composés de celles-ci, lesdites spirales étant insérées dans la bande transporteuse réalisée sous forme de bande à maillons métalliques et étant accouplées avec celle-ci grâce à un fil à transfilage inséré dans la bande transporteuse (1).

15. Bande transporteuse selon l'une quelconque des revendications 9 à 14, **caractérisée en ce que** chaque mécanisme d'amarrage (23) présente un arbre d'enroulement (27), qui peut être tourné dans le sens d'enroulement à l'aide d'un levier d'amarrage (32).

16. Bande transporteuse selon la revendication 15, **caractérisée en ce que** l'arbre d'enroulement (27) est en prise avec un premier mécanisme à rochet (29, 30), qui empêche une rotation de l'arbre d'enroulement (27) dans le sens de déroulement, et **en ce que** l'arbre d'enroulement (27) est en prise avec le levier d'amarrage (32) par l'intermédiaire d'un second mécanisme à rochet (29, 37), par l'intermédiaire duquel l'arbre d'enroulement (27) ne peut être actionné que dans le sens d'enroulement.

17. Dispositif auxiliaire de fermeture (13) pour la jonction provisoire des extrémités de bande frontales (9, 10) d'une bande transporteuse (1), se composant d'une pluralité d'éléments auxiliaires de fermeture (14, 15), qui présentent des organes de fixation (16 à 21) pour la fixation sur la bande transporteuse (1) ainsi que des éléments de serrage (23), **caractérisé en ce que** les éléments auxiliaires de fermeture sont réalisés sous la forme de sangles d'amarrage (14, 15), qui présentent un mécanisme d'amarrage (23) à chaque fois en tant qu'éléments de serrage.

18. Dispositif auxiliaire de fermeture selon la revendication 17, **caractérisé en ce que** les sangles d'amarrage sont réalisées en deux parties avec respectivement une première sangle, au niveau de laquelle est fixé le mécanisme d'amarrage, et avec une seconde sangle.

19. Dispositif auxiliaire de fermeture selon la revendication 17, **caractérisé en ce que** les sangles d'amarrage (14, 15) sont réalisées en une seule pièce avec chaque fois une seule sangle 22 et **en ce que** deux oeillets leur sont affectés à chaque fois en tant qu'organes de fixation, à travers lesquels peut être passée ou est passée la sangle (22).

20. Dispositif auxiliaire de fermeture selon l'une quelconque des revendications 17 à 19, **caractérisé en ce que** les organes de fixation présentent des spirales ou sont composés de celles-ci, lesdites spirales étant insérées dans la bande transporteuse réalisée sous forme de bande à maillons métalliques et pouvant être accouplées avec celle-ci grâce à un fil à transfilage inséré dans la bande transporteuse (1).

21. Dispositif auxiliaire de fermeture selon l'une quelconque des revendications 17 à 20, **caractérisé en ce que** chaque mécanisme d'amarrage (23) présente un arbre d'enroulement (27), qui peut être tourné dans le sens d'enroulement à l'aide d'un levier d'amarrage (32).

22. Dispositif auxiliaire de fermeture selon la revendication 21, **caractérisé en ce que** l'arbre d'enroulement (27) est en prise avec un premier mécanisme à rochet (29, 30), qui empêche une rotation de l'arbre d'enroulement (27) dans le sens de déroulement, et **en ce que** l'arbre d'enroulement (27) est en prise avec le levier d'amarrage(32) par l'intermédiaire d'un second mécanisme à rochet (29, 37), par l'intermédiaire duquel l'arbre d'enroulement (27) ne peut être actionné que dans le sens d'enroulement.
